# EUROPEAN PATENT SPECIFICATION

(11) **EP 4 532 937 B1**
(45) Date of publication and mention of the grant of the patent: **01.04.2026**
(21) Application number: 22732464.7
(22) Date of filing: 31.05.2022
(51) Int. Cl.: F04D 13/06, F04D 29/02, F04D 29/58, H02K 5/128

(54) **AUTOMOTIVE ELECTRONIC FLUID PUMP**
ELEKTRONISCHE FLÜSSIGKEITSPUMPE FÜR KRAFTFAHRZEUGE
POMPE À FLUIDE ÉLECTRONIQUE AUTOMOBILE

(43) Date of publication of application: 09.04.2025
(73) Proprietor: Pierburg Pump Technology GmbH, 41460 Neuss (DE)
(72) Inventor: DICK, Georg, 41460 Neuss (DE); RUSZCZYK, Jakob, 41460 Neuss (DE); THULASIMANI, Monika Raja, 41460 Neuss (DE)
(74) Representative: Eisenführ Speiser
(86) International application number: PCT/EP2022/064760
(87) International publication number: WO 2023/232230

(56) References cited:
- WO-A1-2012/024778
- WO-A1-2017/140334
- US-A- 6 091 174

## Description

The invention refers to an automotive electronic fluid pump with an electronically commutated pump motor driving a pump rotor being provided in a wet motor rotor chamber which is separated from a dry motor stator chamber by a substantially cylindrical separation tube. This pump concept avoids any dynamic sealings between the wet part and the dry part of the fluid pump.

An important issue of this pump concept is the exact coaxiality of the motor stator, the separation tube and the motor rotor. A high reproduction quality of the coaxiality allows to define a small airgap between the motor stator and the motor rotor, and a small airgap provides a high electromagnetic efficiency of the motor. Another important issue of any electrical automotive device is the electromagnetic compatibility (EMC) of that device.

Generally, a metal motor frame provides a high reproduction quality. WO 2017 140 334 A1 discloses a typical motor concept wherein a deep-drawn metal sheet body defines the separation tube, a rotor slide bearing ring and a transversal separation wall for fluidically separating the wet motor rotor chamber from the dry electronics chamber. The pump housing is completely made of plastic so that no electromagnetic shielding of the motor stator is provided. The electromagnetic shielding could be provided by a metal pump housing which would result in a relatively heavy and expensive fluid pump both of which is generally not acceptable for automotive devices and applications.

Another typical motor concept is shown in WO 2012/024778 A1.

It is an object of the invention to provide a competitive automotive electronic fluid pump with good electromagnetic efficiency and electromagnetic compatibility.

This object is solved with an automotive electronic fluid pump with the features of claim 1.

The automotive electronic fluid pump according to the invention is provided with an electric pump motor comprising an electronic motor stator with several stator coils. The rotor comprises a motor rotor, a pump rotor and a rotor shaft mechanically and co-rotatably connecting the motor rotor and the pump rotor. The motor rotor is preferably permanently magnetized and is electromagnetically driven by the motor stator surrounding the central motor rotor. The pump rotor can be a positive displacement pump rotor or is, preferably, a flow pump rotor.

The motor electronics comprises a commutation electronics and several power semiconductors for electrically energizing the stator coils. The motor electronics is arranged within a dry electronics chamber axially adjacent to a wet motor rotor chamber. A non-ferrimagnetic separation tube fluidically separates the wet motor rotor chamber from the dry motor stator chamber and is provided in the cylindrical airgap between the motor rotor and the rotor stator. A substantially transversal separation wall fluidically separates the wet motor rotor chamber from the dry electronics chamber.

According to the invention, a pot-like motor housing frame is provided, the motor housing frame defining a bottom wall substantially lying in a transversal plane and a cylindrical side wall being substantially cylindrical in shape. The housing frame bottom wall defines the separation wall between the wet motor rotor chamber and the dry electronics chamber.

The motor housing frame side wall portion supports the radial outside of the motor stator.

The motor housing frame is made of a deep-drawn metal sheet body also defining a cylindrical support collar axially proximally protruding from the frame bottom wall into the motor rotor chamber and being made by reverse-drawing. No additional machining is necessary to provide a sufficiently precise cylindrical support collar. The cylindrical support collar directly supports a cylindrical support section of the separation tube. The separation tube can be made of any suitable non-ferromagnetic material, and preferably is made of plastic.

Preferably, the motor housing frame is made of a ferromagnetic metal material to provide a good electromagnetic shielding of the motor stator resulting in a good electromagnetic compatibility EMC of the fluid pump. Preferably, the motor housing frame is electrically grounded. Since the metal motor housing frame also defines the transversal separation wall between the wet motor rotor chamber and the dry electronics chamber, the transversal separation wall has a relatively high thermal conductivity so that the heat generated by the motor electronics can efficiently be conducted via the transversal separation wall to the pumping fluid. Preferably, the power semiconductors of the motor electronics are thermally coupled to the motor housing frame without any airgap in between.

The pumping fluid generally can be a gas or a liquid, but preferably is a liquid. Preferably, the fluid pump therefore is a liquid pump, and more preferably is a coolant liquid pump of an automotive coolant and/or a heating circuit.

The metal sheet motor housing frame is sufficiently solid and stiff to precisely support and coaxiality position the motor stator and the separation tube. Additionally, the motor housing frame electromagnetically shields the motor stator so that a good electromagnetic compatibility EMC is realized. The separation tube preferably is made of a light-weight and non-ferromagnetic material, for example is made of a very cost-effective plastic material.

Preferably, the support collar of the motor housing frame supports the radial outside surface of the support section of the separation tube. Preferably, the support collar approximately lies in the cylinder plane defined by the cylindrical airgap between the motor rotor and the motor stator. This results in a relatively large motor stator chamber which is not radially inwardly constricted in the section defined by the support collar. Preferably, the separation tube support section has a reduced radius compared to an air gap section of the separation tube.

Preferably, the plastic separation tube body also defines a rotor shaft bearing support for rotatably supporting the rotor shaft. Preferably, the rotor shaft bearing is of the slide-bearing-type, and the plastic separation tube body directly supports or even directly defines the outside bearing ring of the slide bearing.

Preferably, the complete proximal transversal wall of the electronics chamber is defined by the transversal bottom wall of the pot-like motor housing frame. The proximal transversal wall of the electronics chamber is the wall which separates the electronics chamber from the motor rotor chamber as well as from the motor stator chamber. Since the complete proximal transversal wall of the electronics chamber is defined by the transversal bottom wall of the motor housing frame, no additional wall for separating the electronics chamber from the motor stator chamber is necessary.

Preferably, a separate and additional plastic motor housing houses and surrounds the motor housing frame. The plastic motor housing completely radially surrounds the motor housing frame so that the motor housing provides a mechanical protection of the motor housing frame. The motor stator therefore is radially surrounded by an inner wall defined by the motor housing frame and an adjacent outer wall defined by the plastic motor housing. Preferably, the plastic motor housing defines the circumferential side wall of the electronics chamber.

One embodiment of the invention is explained with reference to the enclosed drawings, wherein
figure 1 shows schematically a longitudinal section of an automotive electronic fluid pump with a motor housing frame and a separation tube supported by the motor housing frame, and
figure 2 only the motor housing frame and the separation tube of figure 1 in a longitudinal section.

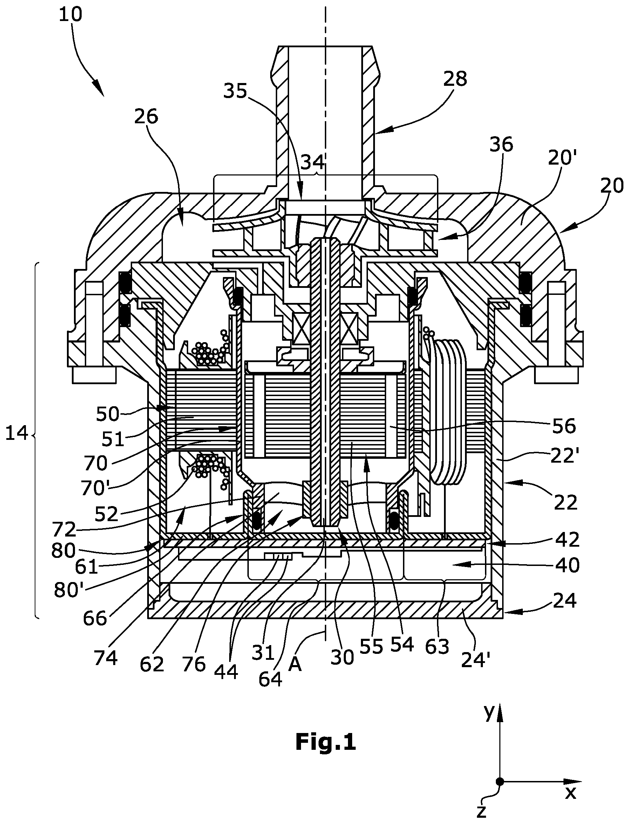

Figure 1 shows an automotive electronic fluid pump 10 which is, in the present embodiment, a liquid pump for pumping a coolant liquid in an automotive coolant circuit. The automotive electronic fluid pump 10 is provided with a brushless electric pump motor 14 which is commutated and energized by a motor electronics 42 comprising a commutation electronics and several power semiconductors 44 for energizing several stator coils 52 of an outside motor stator 50.

The pump 10 is designed dynamic-sealing-free and comprises a wet motor rotor chamber 62 comprising a wet motor rotor 54 and comprises a ringlike dry motor stator chamber 61 with a dry motor stator 50, both chambers 61, 62 being fluidically separated from each other by a substantially cylindrical plastic separation tube 70.

The motor rotor 54 is permanently magnetized and comprises a plurality of identical transversal ferromagnetic rotor sheets 55 and several permanently magnetized rotor pole magnets 56 defining several magnetic rotor poles. The motor rotor 54 is rotating around a longitudinal pump axis A. The rotor of the fluid pump 10 comprises the motor rotor 54, a rotor shaft 30 and a pump rotor 34. The pump rotor 34 is, in this embodiment, an impeller wheel with an axial pump rotor inlet opening 35 and a circumferential radial pump rotor outlet opening 36 so that the present fluid pump 10 is a flow pump. The rotor shaft 30 is provided with an axial coolant channel bore 31 and mechanically co-rotatably connects the motor rotor 54 with the pump rotor 34.

The pump rotor 34 is surrounded by a pump outlet volute 26 defined by a fluid housing part 20 defined by a plastic fluid housing part body 20' which also defines an axial pump inlet duct 28 and a tangential pump outlet duct (not shown in the drawings).

The motor stator 50 comprises a plurality of identical ferromagnetic transversal stator metal sheets 51 and the stator coils 52 which define several electromagnetic stator poles.

The pump motor 14 comprises a pot-like motor housing frame 80 made of a deep-drawn metal sheet body 80' of a ferromagnetic metal. The motor housing frame 80 defines a substantially cylindrical frame side wall 84 and a transversal frame bottom wall 82. The frame bottom wall 82 has two portions, which is the central bottom wall portion defining the transversal separation wall 64 for fluidically separating the wet motor rotor chamber 62 from the dry electronics chamber 40, a ringlike ring bottom wall portion 63 radially surrounding the transversal separation wall 64. The motor housing frame 80 also defines a cylindrical axial support collar 66 protruding proximally axially from the transversal plane XZ of the frame bottom wall 82. The inside surface of the cylindrical support collar 66 directly supports a radial outside surface 702' of a support section 702 of the separation tube 70. The motor housing frame bottom wall 82 defines the complete proximal transversal wall 90 of the electronics chamber 40 separating the electronics chamber 40 from the motor rotor chamber 62 and the motor stator chamber 61.

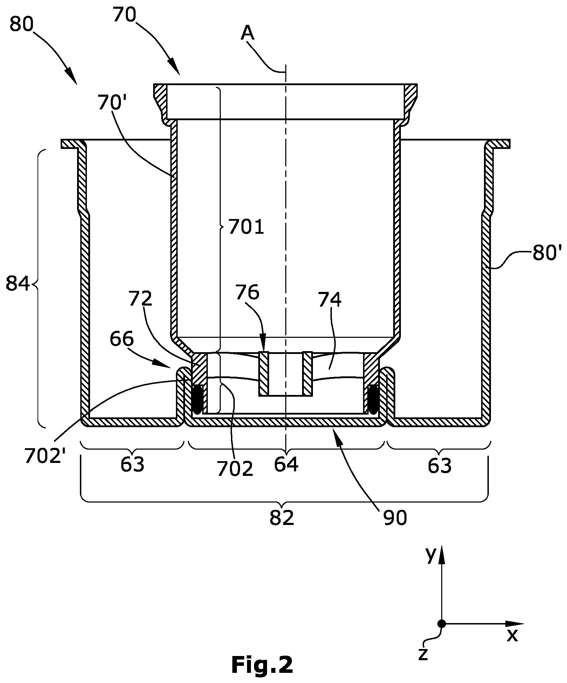

The plastic separation tube 70 is made of a plastic separation tube body 70' and has a substantially cylindrical airgap section 701 and a substantially cylindrical support section 702 with an enforced support ring 72. The support section 702 substantially defined by the support ring 72 has a reduced radius compared to the airgap section 701, as shown in figure 2. The separation tube 70 also defines a ring -like rotor shaft bearing support 76 rotatably supporting the rotor shaft 30. The rotor shaft bearing support 76 is held by several radial support arms 74. The separation tube 70 is one integral part.

The pump housing is defined by the fluid housing part 20, a separate motor housing 22 completely housing the motor housing frame 80 and an electronics chamber lid 24. The motor housing 22 is defined by a plastic motor housing body 22' and the electronics chamber lid 24 is defined by a plastic lid body 24'.

## Claims

1. An automotive electronic fluid pump (10) with an electric pump motor (14), the electric pump motor (14) comprising
an electromagnetic motor stator (50) with several stator coils (52),
a rotor comprising a motor rotor (54) electromagnetically driven by the motor stator (50), a pump rotor (34) and a rotor shaft (30),
a motor electronics (42) being arranged within an electronics chamber (40) and comprising a commutation electronics and power semiconductors (44) for energizing the stator coils (52), and
a separation tube (70) fluidically separating a wet motor rotor chamber (62) from a dry motor stator chamber (61),
whereas a pot-like motor housing frame (80) with a frame bottom wall (82) and a substantially cylindrical frame side wall (84) is provided,
whereas the frame bottom wall (82) defines a substantially transversal separation wall (64) for fluidically separating the wet motor rotor chamber (62) from the dry electronics chamber (40),
whereas the frame side wall (84) supports the radial outside of the motor stator (50),
the automotive electronic fluid pump being **characterised in that**, the motor housing frame (80) is made of a deep-drawn metal sheet body (80'),
whereas the motor housing frame (80) defines a cylindrical axial support collar (66) made by reverse-drawing of the metal sheet body (80'), and
whereas the support collar (66) directly supports a support section (702) of the separation tube (70).

2. The automotive electronic fluid pump (10) of claim 1, whereas the support collar (66) of the motor housing frame (80) supports the radial outside surface (702') of the support section (702) of the separate separation tube (70).

3. The automotive electronic fluid pump (10) of one of the preceding claims, wherein the separation tube (70) is made of a plastic separation tube body (70').

4. The automotive electronic fluid pump (10) of the preceding claim 3, wherein the support section (702) has a reduced radius compared to an air gap section (701) of the plastic separation tube (70).

5. The automotive electronic fluid pump (10) of one of the preceding claims 3 or 4, wherein the plastic separation tube (70) also defines a rotor shaft bearing support (76) for rotatably supporting the rotor shaft (30).

6. The automotive electronic fluid pump (10) of one of the preceding claims, wherein a complete proximal transversal wall (90) of the electronics chamber (40) is defined by the motor housing frame bottom wall (82).

7. The automotive electronic fluid pump (10) of one of the preceding claims, wherein a separate plastic motor housing (22) houses the motor housing frame (80).

8. The automotive electronic fluid pump (10) of one of the preceding claims, wherein the fluid pump (10) is a liquid pump, and preferably is a coolant liquid pump.

## Patentansprüche

1. Elektronische Flüssigkeitspumpe (10) für Kraftfahrzeuge mit einem elektrischen Pumpenmotor (14), wobei der elektrische Pumpenmotor (14) umfasst:
einen elektromagnetischen Motorstator (50) mit mehreren Statorspulen (52),
einen Rotor, der einen Motorrotor (54) umfasst, der elektromagnetisch durch den Motorstator (50) angetrieben wird, einen Pumpenrotor (34) und eine Rotorwelle (30), eine Motorelektronik (42), die in einer Elektronikkammer (40) angeordnet ist und eine Kommutierungselektronik und Leistungshalbleiter (44) zum Erregen der Statorspulen (52) umfasst, und
ein Trennrohr (70), das eine nasse Motorrotorkammer (62) von einer trockenen Motorstator-Kammer (61) fluidisch trennt,
wobei ein topfartiger Motorgehäuserahmen (80) mit einer Rahmenbodenwand (82) und einer im Wesentlichen zylindrischen Rahmenseitenwand (84) vorgesehen ist, wobei die Rahmenbodenwand (82) eine im Wesentlichen quer verlaufende Trennwand (64) zum fluidischen Trennen der nassen Motorrotorkammer (62) von der trockenen Elektronikkammer (40) definiert,
wobei die Rahmenseitenwand (84) die radiale Außenseite des Motorstators (50) trägt,
wobei die elektronische Flüssigkeitspumpe für Kraftfahrzeuge **dadurch gekennzeichnet ist, dass**
der Motorgehäuserahmen (80) aus einem tiefgezogenen Blechkörper (80') besteht, wobei der Motorgehäuserahmen (80) einen zylindrischen axialen Stützkragen (66) definiert, der durch Umziehen des Blechkörpers (80') hergestellt ist, und
wobei der Stützkragen (66) direkt einen Stützabschnitt (702) des Trennrohrs (70) stützt.

2. Elektronische Flüssigkeitspumpe (10) für Kraftfahrzeuge nach Anspruch 1, wobei der Stützkragen (66) des Motorgehäuserahmens (80) die radiale Außenfläche (702') des Stützabschnitts (702) des separaten Trennrohrs (70) stützt.

3. Elektronische Flüssigkeitspumpe (10) für Kraftfahrzeuge nach einem der vorstehenden Ansprüche, wobei das Trennrohr (70) aus einem Kunststoff-Trennrohrkörper (70') besteht.

4. Elektronische Flüssigkeitspumpe (10) für Kraftfahrzeuge nach dem vorstehenden Anspruch 3, wobei der Stützabschnitt (702) einen im Vergleich zu einem Luftspaltabschnitt (701) des Kunststoff-Trennrohrs (70) reduzierten Radius aufweist.

5. Elektronische Flüssigkeitspumpe (10) für Kraftfahrzeuge nach einem der vorstehenden Ansprüche 3 oder 4, wobei das Kunststoff-Trennrohr (70) auch eine Rotorwellenlagerhalterung (76) zum drehbaren Halten der Rotorwelle (30) definiert.

6. Elektronische Flüssigkeitspumpe (10) für Kraftfahrzeuge nach einem der vorstehenden Ansprüche, wobei eine vollständige proximale Querwand (90) der Elektronickammer (40) durch die Motorgehäuse-Rahmenbodenwand (82) des Motorgehäuserahmens definiert ist.

7. Elektronische Flüssigkeitspumpe (10) für Kraftfahrzeuge nach einem der vorstehenden Ansprüche, wobei ein separates Kunststoffmotorgehäuse (22) den Motorgehäuserahmen (80) aufnimmt.

8. Elektronische Flüssigkeitspumpe (10) für Kraftfahrzeuge nach einem der vorstehenden Ansprüche, wobei die Flüssigkeitspumpe (10) eine Flüssigkeitspumpe ist, und vorzugsweise eine Kühlmittelpumpe.

## Revendications

1. Pompe à fluide électronique automobile (10) avec un moteur de pompe électrique (14), le moteur de pompe électrique (14) comprenant
un stator de moteur électromagnétique (50) avec plusieurs bobines de stator (52),
un rotor comprenant un rotor de moteur (54) entraîné électromagnétiquement par le stator de moteur (50), un rotor de pompe (34) et un arbre de rotor (30),
une électronique de moteur (42) étant agencée dans une chambre d'électronique (40) et comprenant une électronique de commutation et des semiconducteurs de puissance (44) pour alimenter les bobines de stator (52), et
un tube de séparation (70) séparant fluidiquement une chambre de rotor de moteur humide (62) d'une chambre de stator de moteur sèche (61),
dans laquelle un cadre de carter de moteur (80) en forme de pot avec une paroi inférieure de cadre (82) et une paroi latérale de cadre sensiblement cylindrique (84) est prévu,
dans laquelle la paroi inférieure de cadre (82) définit une paroi de séparation sensiblement transversale (64) pour séparer fluidiquement la chambre de rotor de moteur humide (62) de la chambre d'électronique sèche (40), dans laquelle la paroi latérale de cadre (84) supporte l'extérieur radial du stator de moteur (50),
la pompe à fluide électronique automobile étant **caractérisée en ce que**,
le cadre de carter de moteur (80) est constitué d'un corps de tôle (80') ayant subi un emboutissage profond,
dans laquelle le cadre de carter de moteur (80) définit un collier de support axial cylindrique (66) réalisé par emboutissage par retournement du corps de tôle (80'), et
dans laquelle le collier de support (66) supporte directement une section de support (702) du tube de séparation (70).

2. Pompe à fluide électronique automobile (10) selon la revendication 1, dans laquelle le collier de support (66) du cadre de carter de moteur (80) supporte la surface extérieure radiale (702') de la section de support (702) du tube de séparation (70) séparé.

3. Pompe à fluide électronique automobile (10) selon l'une des revendications précédentes, dans laquelle le tube de séparation (70) est constitué d'un corps de tube de séparation en plastique (70').

4. Pompe à fluide électronique automobile (10) selon la revendication 3 précédente, dans laquelle la section de support (702) a un rayon réduit par rapport à une section d'espace d'air (701) du tube de séparation (70) en plastique.

5. Pompe à fluide électronique automobile (10) selon l'une des revendications 3 ou 4 précédentes,
dans laquelle le tube de séparation (70) en plastique définit également un support de palier d'arbre de rotor (76) pour supporter de manière rotative l'arbre de rotor (30).

6. Pompe à fluide électronique automobile (10) selon l'une des revendications précédentes, dans laquelle une paroi transversale proximale complète (90) de la chambre d'électronique (40) est définie par la paroi inférieure de cadre (82) de carter de moteur.

7. Pompe à fluide électronique automobile (10) selon l'une des revendications précédentes, dans laquelle un carter de moteur en plastique séparé (22) abrite le cadre de carter de moteur (80).

8. Pompe à fluide électronique automobile (10) selon l'une des revendications précédentes, dans laquelle la pompe à fluide (10) est une pompe à liquide, et est de préférence une pompe à liquide de refroidissement.
